# EUROPÄISCHE PATENTANMELDUNG

(11) **EP 1 657 260 A1**
(43) Veröffentlichungstag der Anmeldung: **17.05.2006**
(21) Anmeldenummer: 04026982.1
(22) Anmeldetag: 12.11.2004
(51) Int. Cl.: C08F 8/44, C08F 8/14, C04B 24/26, C04B 24/16, C04B 24/32

(54) **Anionpolymere**

(71) Anmelder: Cognis IP Management GmbH, 40589 Düsseldorf (DE)
(72) Erfinder: Valls, Ramon, 08022 Barcelona (ES); Tuduri, Jaime, 08224 Terrassa (Barcelona) (ES)

(57) **Zusammenfassung**

Vorgeschlagen werden neue Anionpolymere, die dadurch erhältlich sind, dass man
(a) olefinisch ungesättigte Carbonsäuren oder deren Ester mit Alkoholen mit 1 bis 18 Kohlenstoffatomen gegebenenfalls zusammen mit Comonomeren vom Typ
   (a1) Dipropylenglycoldiacrylat (DPGDA),
   (a2) Tripropylenglycoldiacrylat (TPGDA),
   (a3) Acrylamidomethylpropansulfonsäure (AMPS), und/oder
   (a4) Acrylsäureethylester (AE), polymerisiert,
(d) die resultierenden Zwischenprodukte mit einer Mischung von
   (b1) C₁-C₄-Alkylpolyalkylenglykolen und
   (b2) C₆-C₂₂-Alkyl- und/oder Alkenylpolyalkylenglykolen verestert, und
(c) die so erhaltenen Ester mit Basen neutralisiert.

## Beschreibung

### Gebiet der Erfindung

Die Erfindung befindet sich auf dem Gebiet der Polymere und betrifft neue Anionpolymere auf Basis von Acrylsäureverbindungen, ein Verfahren zu ihrer Herstellung sowie ihre Verwendung als Hilfsstoffe bei der Verarbeitung von Zement und Beton.

### Stand der Technik

Bei der Herstellung von wässrigen Zementzubereitungen bzw. Beton besteht das Problem, die Viskosität der Masse während Herstellung, Transport und Einsatz so niedrig zu halten, dass ein problemlose Verarbeitung möglich ist, ohne dass die Mischung so dünnflüssig wird, dass sie aus der Form rinnt. Man kann dieses Gleichgewicht mit Hilfe des Wassergehaltes einstellen, in der Regel wird dazu aber eine solche Menge erforderlich sein, dass sich die Zeit zum Aushärten stark verzögert. Aus diesem Zweck werden den Zubereitungen Viskositätsregulatoren zugesetzt, die die Viskosität auch ohne Zusatz größerer Wassermengen im erforderlichen Bereich halten und gleichzeitig die offene Zeit bis zum Abbinden so weit verzögern, dass es nicht während des Transportes schon zu einem Aushärten kommt.

Aus dem Stand der Technik sind verschiedene Polymere sowie deren Verwendung als Zement- bzw. Betonverflüssigungsmittel bekannt. Gegenstand der **EP 1090901 A1** (Takemoto) ist ein Verfahren zur Herstellung von Polyetherestern mit durchschnittlichen Molgewichten im Bereich 5.000 bis 40.000, bei dem man zunächst Methoxypolyalkylenglykolether mit Methacrylsäure umsetzt und die so erhaltenen Monomeren in wässriger Lösung polymerisiert. Aus den beiden Druckschriften **US 5,614,017** und **US 5,670,578** (Arco) sind Polymere bekannt, die man durch Veresterung von unvernetzten Polycarbonsäuren mit Polyethern erhält. Die Reaktion verläuft in zwei Schritten, wobei man die Mischung zunächst auf 120 °C erwärmt, um Wasser zu entfernen und danach auf 170 °C erhitzt, um die eigentliche Veresterung durchzuführen. In der **US 6,034,208** (Arco) wird vorgeschlagen, Hydroxy(meth)acrylate mit Alkylenoxiden umzusetzen und die so erhaltenen Addukte dann mit Acrylsäure zu polymerisieren. Gegenstand der **US 5,919,300** (Sika) sind Copolymere, die durch gemeinsame Polymerisation von (a) N-Vinylamiden bzw. Lactamen, (b) Estern der Methacrylsäure mit Polyethylenglykolen und (c) Methacrylsulfonsäure erhalten werden. In der **US 5,665,158** (Grace) werden Polymere beschrieben, die durch Umsetzung von Poly(meth)acrylsäure mit alkoxylierten Aminen erhalten werden. Die Lehren der beiden Schriften **US 6,139,623** und **US 6,172,147** (Grace) ergänzen dieses Verfahren dahin gehend, dass abschließend Entschäumer (Tributylphosphat) oder Aniontenside (Alkylethersulfat) zugesetzt werden. Aus der **EP 1396506 A1** (Cognis) sind ferner Anionpolymere für den genannten Einsatzzweck bekannt, die durch Veresterung von vernetzten Polyacrylsäuren mit endgruppenverschlossenen Alkenglykolen und nachfolgende Neutralisation erhalten werden.

Die bekannten Additive sind jedoch im Hinblick auf ihre anwendungstechnischen Eigenschaften mehr oder weniger befriedigend. Ihnen allen gemein ist jedoch der Nachteil, dass ihre Verwendung in den Zement- oder Betonmassen zu einer unerwünschten Schaumbildung führt, die nur dadurch vermieden werden kann, indem man den Zubereitungen zusätzliche Hilfsstoffe wie z.B. Schaumbremsen oder Entschäumer zusetzt. Da diese wiederum die viskositätsregulierenden Eigenschaften nachteilig beeinflussen können und sich zudem nicht immer leicht in die Formulierungen einarbeiten lassen, liegt es auf der Hand, dass im zementverarbeitenden Gewerbe ein vornehmliches Bestreben besteht, diesem Problem abzuhelfen.

Somit hat die Aufgabe der vorliegenden Erfindung darin bestanden, neue polymere Additive für die Herstellung von wässrigen Zementzubereitungen bzw. Beton, sogenannte "Superplasticizer" zur Verfügung zu stellen, welche frei von den eingangs geschilderten Nachteilen sind und insbesondere schaumfrei bzw. schaumarm sind, so dass die Mitverwendung von schaumdrückenden oder entschäumenden Additiven nicht länger erforderlich ist.

### Beschreibung der Erfindung

Gegenstand der Erfindung sind neue Anionpolymere, die dadurch erhältlich sind, dass man
(a) olefinisch ungesättigte Carbonsäuren oder deren Ester mit Alkoholen mit 1 bis 18 Kohlenstoffatomen gegebenenfalls zusammen mit Comonomeren vom Typ
   (a1) Dipropylenglycoldiacrylat (DPGDA),
   (a2) Tripropylenglycoldiacrylat (TPGDA),
   (a3) Acrylamidomethylpropansulfonsäure (AMPS), und/oder
   (a4) Acrylsäureethylester (AE), polymerisiert,
(b) die resultierenden Zwischenprodukte mit einer Mischung von
   (b1) C₁-C₄-Alkylpolyalkylenglykolen und
   (b2) C₆-C₂₂-Alkyl- und/oder Alkenylpolyalkylenglykolen verestert, und
(c) die so erhaltenen Ester mit Basen neutralisiert.

Überraschenderweise wurde gefunden, dass die neuen Anionpolymere gegenüber den vergleichbaren Stoffen des Stands der Technik wässrigen Zementzubereitungen bzw. Beton nicht nur ein mindestens gleichwertiges rheologisches Verhalten verleihen und zudem das Abbinden verzögern, sondern zudem auch noch schaumfrei bzw. so schaumarm sind, dass die Mitverwendung von schaumdrückenden oder entschäumenden Additiven in den Formulierungen nicht mehr erforderlich ist.

Ein weiterer Gegenstand der Erfindung betrifft ein Verfahren zur Herstellung der neuen Anionpolymere, bei dem man
(a) olefinisch ungesättigte Carbonsäuren oder deren Ester mit Alkoholen mit 1 bis 18 Kohlenstoffatomen gegebenenfalls zusammen mit Comonomeren vom Typ
   (a1) Dipropylenglycoldiacrylat (DPGDA),
   (a2) Tripropylenglycoldiacrylat (TPGDA),
   (a3) Acrylamidomethylpropansulfonsäure (AMPS), und/oder
   (a4) Acrylsäureethylester (AE), polymerisiert,
(c) die resultierenden Zwischenprodukte mit einer Mischung von
   (b1) C₁-C₄-Alkylpolyalkylenglykolen und
   (b2) C₆-C₂₂-Alkyl- und/oder Alkenylpolyalkylenglykolen verestert, und
(c) die so erhaltenen Ester mit Basen neutralisiert.

### Polymerisation

Im ersten Schritt werden die olefinisch ungesättigten Carbonsäuren oder deren Ester gegebenenfalls zusammen mit den Comonomeren polymerisiert. Als ungesättigte Carbonsäuren kommen Acrylsäure, Methacrylsäure sowie deren Gemische in Frage. Alternativ können auch deren Ester mit Alkoholen, wie beispielsweise Isopropylalkohol, die isomeren Butanole, Capronalkohol, Caprylalkohol, 2-Ethylhexylalkohol, Caprinalkohol, Laurylalkohol, Isotridecylalkohol, Myristylalkohol, Cetylalkohol, Palmoleylalkohol, Stearylalkohol, Isostearylalkohol, Oleylalkohol, Elaidylalkohol, Petroselinylalkohol, Linolylalkohol, Linolenylalkohol, E-laeostearylalkohol, Arachylalkohol, Gadoleylalkohol, Behenylalkohol, Erucylalkohol und Brassidylalkohol oder vorzugsweise Methanol oder Ethanol eingesetzt werden. Das Gewichtsverhältnis der olefinisch ungesättigten Komponenten und der Comonomere - so diese mitverwendet werden - kann dabei 90 : 10 bis 99 : 1 betragen, vorzugsweise werden jedoch 1 bis 6 und insbesondere 2 bis 5 Gew.-% der Comonomere bezogen auf die olefinische Komponente eingesetzt. Die Polymerisation kann in an sich bekannter Weise durchgeführt werden, d.h. in Gegenwart von Radikalstartern wie Persulfaten oder Bisulfiten. Nach dem Start der Reaktion wird ein starker Temperaturanstieg beobachtet, wobei man durch geeignete Maßnahmen, beispielsweise Kühlen im Eisbad darauf achtet, dass ein Wert von 110 °C nicht überschritten wird. Die Reaktion kann in organischen Lösemitteln, wie beispielsweise Glykol durchgeführt werden, vorzugsweise kommt aber ein wässriges Medium zum Einsatz. In der Regel weisen die Polymere anschließend ein mittleres Molekulargewicht im Bereich von 1.000 bis 5.000 Dalton auf.

### Veresterung und Neutralisation

In der zweiten Stufe des Verfahrens findet die Bildung von Estern der vernetzten Polyacrylsäureverbindungen mit einer Mischung aus kurzkettigen und langkettigen Polyalkylenglykolen statt.

Zu diesem Zweck kommen als Komponente (b1) Stoffe der Formel (**I**) in Frage,

**R**^{**1**}**(OCHCHR**^{**2**}**)**_{**n**}**OH** (I)

in der R¹ für Alkylreste mit 1 bis 4 Kohlenstoffatomen, R² für Wasserstoff oder eine Methylgruppe und n für Zahlen von 1 bis 10 steht. Vorzugsweise handelt es sich dabei um Methylpolyethylenglykole. Weiterhin bevorzugt ist der Einsatz von Alkylpolyalkylenglykolen, speziell Alkylpolyethylenglykolen der Formel (I), die ein durchschnittliches Molekulargewicht von 200 bis 2.000 und insbesondere 500 bis 1.000 Dalton aufweisen. Die Komponente (b1) verleiht dem Molekül in erster Linie viskositätsreduzierende Eigenschaften. Als Komponente (b2), die im Molekül für die neuen entschäumenden Eigenschaften Verantwortung trägt, kommen Stoffe der Formel (II) in Betracht, 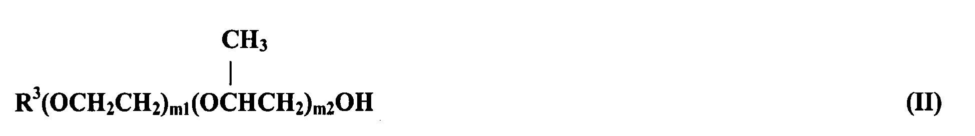 in der R³ für Alkyl- und/oder Alkenylreste mit 6 bis 22, vorzugsweise 12 bis 20 und insbesondere 16 bis 18 Kohlenstoffatomen sowie m1 und m2 unabhängig voneinander für 0 oder Zahlen von 1 bis 20 mit der Maßgabe steht, dass m1 und m2 nicht beide gleich Null sein können. Vorzugsweise handelt es sich dabei um Anlagerungsprodukte von durchschnittlich 5 bis 15 Mol Ethylenoxid und/oder 5 bis 15 Mol Propylenoxid an technische Kokosfettalkohole. Besonders bevorzugt ist ein Anlagerungsprodukt von 4 Mol Ethylenoxid und 11 Mol Propylenoxid an technischen Cetearylalkohol (Bublex 250, Cognis Iberia). Die Komponenten (b1) und (b2) können dabei im Gewichtsverhältnis 90 : 10 bis 10 : 90 und vorzugsweise 80 : 20 bis 50 : 50 eingesetzt werden.

Zur Herstellung der Ester empfiehlt es sich, die Polyacrylsäureverbindungen und die Summe der Polyalkylenglykole im molaren Verhältnis 2 : 1 bis 5 : 1, vorzugsweise 3 : 1 bis 4 : 1 einzusetzen. Die Reaktionstemperatur kann dabei 100 bis 200 und vorzugsweise etwa 120 bis 180 °C betragen. Außerdem empfiehlt es sich hier, mit vermindertem Druck zu arbeiten und das entstehende Kondensationswasser kontinuierlich aus dem Gleichgewicht zu entfernen. Im Anschluss an die Veresterung werden die Polymere mit wässrigen Alkalihydroxiden, wie beispielsweise Natrium- oder Kaliumhydroxid auf einen pH-Wert im Bereich von 6 bis 8 eingestellt. Auf diese Weise werden klare bis milchig-trübe Lösungen erhalten, die einen Feststoffgehalt im Bereich von 35 bis 55 Gew.-% aufweisen.

### Gewerbliche Anwendbarkeit

Ein weiterer Gegenstand der Erfindung betrifft die Verwendung der neuen Anionpolymeren als viskositätsregulierende bzw. abbindeverzögernde Zusätze zu wässrigen Zementzubereitungen bzw. Beton, in denen sie in Mengen von 0,01 bis 1, vorzugsweise 0,1 bis 0,5 Gew.-%-bezogen auf den Feststoffgehalt der Zubereitungen - enthalten sein können.

### Beispiele

### Beispiel H1

*(A) Herstellung der vernetzten Polyacrylsäure.* In einem Polymerisationsreaktor wurden 25,2 g Acrylsäure, 1,6 g Dipropylenglycoldiacrylat (DPGDA) und 41,2 g Wasser vorgelegt und auf 10 °C gekühlt. Dann wurden unter starkem Rühren 1 g Ammoniumpersulfat in 1,6 g Wasser sowie 5,2 g Natriummetabisulfit in 13,1 g Wasser hinzugegeben. Innerhalb von 30 min stieg die Reaktion bis auf 105°C an. Nachdem ein langsames Absinken anzeigte, dass die Reaktion abgeschlossen war, wurde Wasser zugegeben, so dass eine milchig-weiße Dispersion mit einem Feststoffgehalt von 52 Gew.-% und einer Säurezahl von 265 resultierte. *(B) Herstellung des Polyacrylsäureesters.* 300 g (1,42 Mol) der nach (A) hergestellten vernetzten Polyacrylsäure wurden zusammen mit 225 g (0,3 Mol) methylverschlossenem Polyethylenglykol (Molgewicht 750), 50 g (0,1 Mol) Kokosalkohol+7EO und 6 g p-Toluolsulfonsäure in einem Reaktor vorgelegt und langsam auf 120 °C erhitzt. Das bei der Reaktion entstandene Wasser wurde unter Anlegen eines leichten Vakuums kontinuierlich entfernt. Nach Abschluss der Wasserabscheidung wurde die Mischung 3 h bei 180 °C gerührt. Die resultierende dunkel gefärbte Flüssigkeit wurde mit 40 Gew.-%iger Natronlauge neutralisiert und mit Wasser auf einen Feststoffgehalt von 46 Gew.-% verdünnt.

### Beispiel H2

*(A) Herstellung der vernetzten Polyacrylsäure.* In einem Polymerisationsreaktor wurden 25,4 g Acrylsäure, 0,8 g Tripropylenglycoldiacrylat (TPGDA) und 41,2 g Wasser vorgelegt und auf 10 °C gekühlt. Dann wurden unter starkem Rühren 1 g Ammoniumpersulfat in 1,6 g Wasser sowie 5,2 g Natriummetabisulfit in 13,1 g Wasser hinzugegeben. Innerhalb von 30 min stieg die Reaktion bis auf 105°C an. Nachdem ein langsames Absinken anzeigte, dass die Reaktion abgeschlossen war, wurde Wasser zugegeben, so dass eine Dispersion mit einem Feststoffgehalt von 37 Gew.-% und einer Säurezahl von 203 resultierte. *(B) Herstellung des Polyacrylsäureesters.* 433 g (1,57 Mol) der nach (A) hergestellten vernetzten Polyacrylsäure wurden zusammen mit 150 g (0,2 Mol) methylverschlossenem Polyethylenglykol (Molgewicht 750), 50 g (0,1 Mol) Kokosalkohol+7EO und 3 g p-Toluolsulfonsäure in einem Reaktor vorgelegt und auf 120°C erhitzt. Das bei der Reaktion entstandene Wasser wurde unter Anlegen einen leichten Vakuums kontinuierlich entfernt. Nach Abschluss der Wasserabscheidung wurde die Mischung 3 h bei 180 °C gerührt. Die dunkel gefärbte Flüssigkeit wurde mit 40 Gew.-%iger Natronlauge neutralisiert, mit Wasser auf einen Feststoffgehalt von 46 Gew.-% verdünnt und wies eine Säurezahl von 211 auf.

### Beispiel H3

*(A) Herstellung der vernetzten Polyacrylsäure.* In einem Polymerisationsreaktor wurden 300 g Wasser vorgelegt, auf 100 °C erhitzt und dann 30 min mit Stickstoff gespült. Anschließend wurden 272 g einer Mischung aus Acrylsäure und Methacrylsäure im Molverhältnis 1:1 1 sowie 48 g Acrylamidomethylpropansulfonsäure (AMPA) hinzugegeben. Unter starkem Rühren wurden innerhalb von 4 h 9,8 g Wasserstoffperoxid, 28 g Thioglycolsäure und 100 g Wasser hinzugegeben. Die Mischung wurde weitere 2 h bei 100 °C gerührt, dann abgekühlt und mit Wasser verdünnt, so dass eine Dispersion mit einem Feststoffgehalt von etwa 36 Gew.-% und einer Säurezahl von 105 resultierte. *(B) Herstellung des Polyacrylsäureesters.* 442 g (1,52 Mol) der nach (A) hergestellten vernetzten Poly(meth)acrylsäure wurden zusammen mit 225 g (0,3 Mol) methylverschlossenem Polyethylenglykol (Molgewicht 750), 50 g (0,1 Mol) Stearylalkohol+5EO und 6 g p-Toluolsulfonsäure in einem Reaktor vorgelegt und auf 120 °C erhitzt. Das bei der Reaktion entstandene Wasser wurde unter Anlegen einen leichten Vakuums kontinuierlich entfernt. Nach Abschluss der Wasserabscheidung wurde die Mischung 3 h bei 180 °C gerührt. Die dunkel gefärbte Flüssigkeit wurde mit 40 Gew.-%iger Natronlauge neutralisiert und mit Wasser auf einen Feststoffgehalt von 46 Gew.-% verdünnt.

### Beispiel H4

*(A) Herstellung der vernetzten Polyacrylsäure.* In einem Polymerisationsreaktor wurden 350 g Wasser vorgelegt, auf 85 °C erhitzt und dann 30 min mit Stickstoff gespült. Anschließend wurden 358 g Acrylsäure und 40 g Acrylsäureethylester hinzugegeben. Unter starkem Rühren wurden innerhalb von 2 h 9,8 g Wasserstoffperoxid, 12,5 g Propylmercaptat und 120 g Wasser hinzugegeben. Die Mischung wurde eine weitere h bei 85 °C gerührt, dann abgekühlt, mit wässriger Natriumhydroxidlösung auf pH 7,5 eingestellt und mit Wasser verdünnt, so dass eine Dispersion mit einem Feststoffgehalt von etwa 40 Gew.-% resultierte. *(B) Herstellung des Polyacrylsäureesters.* 480 g (1,55 Mol) des nach (A) hergestellten vernetzten Polyacrylsäure/acrylsäureesters wurden zusammen mit 150 g (0,2 Mol) methylverschlossenem Polyethylenglykol (Molgewicht 750), 96 g (0,2 Mol) Cetearylalkohol+5EO und 6 g p-Toluolsulfonsäure in einem Reaktor vorgelegt und auf 120 °C erhitzt. Das bei der Reaktion entstandene Wasser wurde unter Anlegen einen leichten Vakuums kontinuierlich entfernt. Nach Abschluss der Wasserabscheidung wurde die Mischung 3 h bei 180 °C gerührt. Die dunkel gefärbte Flüssigkeit wurde mit 40 Gew.-%iger Natronlauge neutralisiert und mit Wasser auf einen Feststoffgehalt von 46 Gew.-% verdünnt.

### Beispiel H5

*(A) Herstellung der vernetzten Polyacrylsäure.* In einem Polymerisationsreaktor wurden 24 g Acrylsäure, 0,8 g Tripropylenglycoldiacrylat und 41 g Wasser bei 10 °C vermischt und anschließend mit 1 g Ammoniumpersulfat und 5 g Natriummetabisulfit in 14 g Wasser versetzt. Der Reaktor wurde verschlossen und 1 h auf eine Temperatur von 105 bis 110 °C erhitzt. Anschließend wurde der Ansatz abgekühlt entspannt und die resultierende vernetzte Polyacrylsäure durch Zugabe von Wasser auf einen Feststoffgehalt von 26 Gew.-% eingestellt. *(B) Herstellung des Polyacrylsäureesters.* 300 g der zuvor hergestellten vernetzten Polyacrylsäure wurde zusammen mit 265 g methylendgruppenverschlossenem Polyethylenglykol (Molgewicht 500) vermischt und im Vakuum bei ca. 60 °C von Wasserspuren befreit. Anschließend wurde 13 g eines Anlagerungsproduktes von 3 Mol Ethylenoxid und 6 Mol Propylenoxid an Cetearylalkohol sowie als Katalysator 2 g p-Toluolsulfonsäure hinzugegeben und die Mischung über 10 h auf 150 °C erhitzt. Das resultierende Veresterungsprodukt wurde durch Zugabe von Natriumhydroxidlösung auf einen pH von 7 eingestellt und mit Wasser bis auf einen Feststoffgehalt von 35 Gew.-% verdünnt.

### Vergleichsbeispiel V1

*(A) Herstellung der vernetzten Polyacrylsäure.* In einem Polymerisationsreaktor wurden 24 g Acrylsäure, 0,8 g Tripropylenglycoldiacrylat und 41 g Wasser bei 10 °C vermischt und anschließend mit 1 g Ammoniumpersulfat und 5 g Natriummetabisulfit in 14 g Wasser versetzt. Der Reaktor wurde verschlossen und 1 h auf eine Temperatur von 105 bis 110 °C erhitzt. Anschließend wurde der Ansatz abgekühlt entspannt und die resultierende vernetzte Polyacrylsäure durch Zugabe von Wasser auf einen Feststoffgehalt von 26 Gew.-% eingestellt. *(B) Herstellung des Polyacrylsäureesters.* 300 g der zuvor hergestellten vernetzten Polyacrylsäure wurde zusammen mit 265 g methylendgruppenverschlossenem Polyethylenglykol (Molgewicht 500) vermischt und im Vakuum bei ca. 60 °C von Wasserspuren befreit. Anschließend wurden 2 g p-Toluolsulfonsäure hinzugegeben und die Mischung über 10 h auf 150 °C erhitzt. Das resultierende Veresterungsprodukt wurde durch Zugabe von Natriumhydroxidlösung auf einen pH von 7 eingestellt und mit Wasser bis auf einen Feststoffgehalt von 35 Gew.-% verdünnt.

### Anwendungstechnische Untersuchungen

300 g Portlandzement und 850 Normsand (DIN-EN 196-1) sowie 130 g Wasser wurden vermischt und mit jeweils - bezogen auf Portlandzement - 1 Gew.-% der Polymere gemäß Herstellbeispiel H5 bzw. Vergleichsbeispiel V1 versetzt. Die Zubereitung wurde in einem Mischer 3 min intensiv verrührt und dann zum einen die mittlere Konsistent entsprechend dem "Flow Table Test" (ASTM C 124-UNI 8020/A-UNE 7102) sowie die Dichte der Zubereitungen bestimmt. Die Ergebnisse sind in Tabelle 1 zusammengefasst:

**Tabelle 1 Konsistenz und Dichte**

| | **Valor Flow Table** | **Dichte [g/cc]** |
|---|---|---|
| Kontrollversuch | 0 | |
| 1 Gew.-% Beispiel H5 | 145 | 2,3 |
| 1 Gew.-% Beispiel V1 | 140 | 1,8 |

Man erkennt, dass beide Produkte die gleiche plastifizierende und viskositätsreduzierende Wirkung erzielen.

Die Polymeren aus Beispiel H5 und Vergleichsbeispiel V1 wurden auf eine Konzentration von 2 Gew.-% in Wasser verdünnt und diese Lösungen über einen Zeitraum von 1 Minute in Umlaufapparatur gegeben, bei der sie eine Wegstrecke von 50 cm in freiem Fall durchlaufen mussten. Anschließend wurde die Schaumhöhe über der Lösung bestimmt. Im Fall des erfindungsgemäßen Beispiels betrug sie 0,5 ml, im Fall des Vergleichsbeispiels 120 ml.

## Patentansprüche

1. Anionpolymere, **dadurch** erhältlich, dass man
(a) olefinisch ungesättigte Carbonsäuren oder deren Ester mit Alkoholen mit 1 bis 18 Kohlenstoffatomen gegebenenfalls zusammen mit Comonomeren vom Typ
(a1) Dipropylenglycoldiacrylat (DPGDA),
(a2) Tripropylenglycoldiacrylat (TPGDA),
(a3) Acrylamidomethylpropansulfonsäure (AMPS), und/oder
(a4) Acrylsäureethylester (AE), polymerisiert,
(b) die resultierenden Zwischenprodukte mit einer Mischung von
(b1) C₁-C₄-Alkylpolyalkylenglykolen und
(b2) C₆-C₂₂-Alkyl- und/oder Alkenylpolyalkylenglykolen verestert, und
(c) die so erhaltenen Ester mit Basen neutralisiert.

2. Verfahren zur Herstellung von Anionpolymeren, bei dem man
(a) olefinisch ungesättigte Carbonsäuren oder deren Ester mit Alkoholen mit 1 bis 18 Kohlenstoffatomen gegebenenfalls zusammen mit Comonomeren vom Typ
(a1) Dipropylenglycoldiacrylat (DPGDA),
(a2) Tripropylenglycoldiacrylat (TPGDA),
(a3) Acrylamidomethylpropansulfonsäure (AMPS), und/oder
(a4) Acrylsäureethylester (AE), polymerisiert,
(b) die resultierenden Zwischenprodukte mit einer Mischung von
(b1) C₁-C₄-Alkylpolyalkylenglykolen und
(b2) C₆-C₂₂-Alkyl- und/oder Alkenylpolyalkylenglykolen verestert, und
(c) die so erhaltenen Ester anschließend mit Basen neutralisiert.

3. Verfahren nach Anspruch 2, **dadurch gekennzeichnet, dass** man als olefinisch ungesättigte Carbonsäure Acrylsäure, Methacrylsäure oder deren Gemische einsetzt.

4. Verfahren nach den Ansprüchen 2 und/oder 3, **dadurch gekennzeichnet, dass** man als olefinisch ungesättigte Carbonsäureester Ester der Acryl- und/oder Methacrylsäure mit Methanol oder Ethanol einsetzt.

5. Verfahren nach mindestens einem der Ansprüche 2 bis 4, **dadurch gekennzeichnet, dass** man die olefinisch ungesättigte Komponente und die Comonomeren im Gewichtsverhältnis 90 : 10 bis 99 : 1 einsetzt.

6. Verfahren nach mindestens einem der Ansprüche 2 bis 5, **dadurch gekennzeichnet, dass** man als Komponente (b1) Alkylpolyalkylenglykole der Formel (I) einsetzt,
**R**^{**1**}**(OCHCHR**^{**2**}**)**_{**n**}**OH** **(I)**
in der R¹ für Alkylreste mit 1 bis 4 Kohlenstoffatomen, R² für Wasserstoff oder eine Methylgruppe und n für Zahlen von 1 bis 10 steht.

7. Verfahren nach mindestens einem der Ansprüche 2 bis 6, **dadurch gekennzeichnet, dass** man Methylpolyethylenglykole einsetzt.

8. Verfahren nach mindestens einem der Ansprüche 2 bis 7, **dadurch gekennzeichnet, dass** man Alkylpolyalkylenglykole der Formel (I) einsetzt, die ein durchschnittliches Molekulargewicht von 200 bis 2.000 Dalton aufweisen.

9. Verfahren nach mindestens einem der Ansprüche 2 bis 8, **dadurch gekennzeichnet, dass** man als Komponente (b2) Alkyl- und/oder Alkenylpolyalkylenglykole der Formel (II) einsetzt, 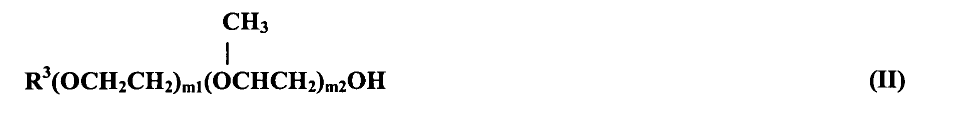 in der R³ für Alkyl- und/oder Alkenylreste mit 6 bis 22, vorzugsweise 12 bis 20 und insbesondere 16 bis 18 Kohlenstoffatomen sowie m1 und m2 unabhängig voneinander für 0 oder Zahlen von 1 bis 20 mit der Maßgabe steht, dass m1 und m2 nicht beide gleich Null sein können.

10. Verfahren nach mindestens einem der Ansprüche 2 bis 9, **dadurch gekennzeichnet, dass** man die Komponenten (b1) und (b2) im Gewichtsverhältnis 90 : 10 bis 10 : 90 einsetzt.

11. Verfahren nach mindestens einem der Ansprüche 2 bis 10, **dadurch gekennzeichnet, dass** man die Polymere mit wässrigen Alkalihydroxiden auf einen pH-Wert im Bereich von 6 bis 8 einstellt.

12. Verfahren nach mindestens einem der Ansprüche 2 bis 11, **dadurch gekennzeichnet, dass** man wässrige, neutralisierte Zubereitungen der Polymere herstellt, die einen Feststoffgehalt im Bereich von 40 bis 50 Gew.-% aufweisen.

13. Verwendung von Anionpolymeren nach Anspruch 1 als viskositätsregulierende Zusätze zu wässrigen Zementzubereitungen bzw. Beton.

14. Verwendung von Anionpolymeren nach Anspruch 1 als abbindeverzögernde Zusätze zu wässrigen Zementzubereitungen bzw. Beton.
